# EUROPEAN PATENT APPLICATION

(11) **EP 4 756 252 A1**
(43) Date of publication of application: **10.06.2026**
(21) Application number: 25215494.3
(22) Date of filing: 13.11.2025
(51) Int. Cl.: F16H 1/20, B60K 1/02, F16H 57/00, F16H 3/00, F16H 3/08, F16H 48/20, B60K 17/04

(54) **ELECTRIC AXLE FOR INDUSTRIAL OR COMMERCIAL VEHICLES**

(30) Priority: 05.12.2024 IT 202400027675
(71) Applicant: FPT Industrial S.p.A., 10156 Torino (IT)
(72) Inventor: PESOLA, Fabio, 10156 Torino (IT); ESPOSITO, Pietro, 10156 Torino (IT); CANTONE, Francesco, 10156 Torino (IT)
(74) Representative: Fiume, Orazio

(57) **Abstract**

Electric axle (EA) for industrial or commercial vehicle comprising a differential (DF) equipped with a crown (DFC) and two half-shafts (HS) to drive in rotation as many vehicle wheels (W), a first electric machine (EM) having a first hollow drive shaft (PS), having a first end (PSa) connectable to a first wheel (1) by means of a first engagement device (S1), and in which, in the drive shaft, a transmission shaft (TS) is coaxially inserted having a first end (Tsa) on which said first wheel (1) is fixed and an output wheel (Wout) which meshes with the crown (DFC) of the differential, a hollow shaft (HWS) fitted on one of the two half-shafts (HS) of the differential having a first end (HWSa), proximal to the differential and a second end (HWSb) distal to the differential, in which a second wheel (2) is fixed on the first end (HWSa) which meshes with said first wheel (1), and on the At the second end (EWSb), a third gear (3) is fixed, which engages a fourth gear (4) that can be connected to a second end (PSb), opposite the first end (PSa), of the crankshaft (PS) by means of a second engagement device (S2).

## Description

### Field of the invention

The present invention relates to the field of electric propulsion systems, particularly in the field of industrial and commercial vehicles equipped with dual-motor electric axle drives.

The electric axle drive of the present invention belongs to the category of axles known as off-axis, in that the rotation axis of one or more electric propulsion machines is parallel but not coaxial with the axle shafts that define the axle.

### State of the art

Commercial and industrial vehicles are undergoing a massive electrification process, replacing internal combustion engines or integrating them with electric motors.

Industrial and commercial vehicles are designed to maximize cargo space, so one of the key aspects is the design of compact and robust axles.

Furthermore, these vehicles require significant torque/power, and to achieve this torque/power, transmissions must ensure a high gear ratio or the use of two electric motors.

It is therefore not easy to balance compactness and a high gear ratio, or the arrangement of two electric motors and the transmission, with respect to vehicle constraints.

More specifically, industrial and commercial vehicles require high axle efficiency at highway speeds, i.e., when there is a low reduction ratio between the revolutions of the electric motor shafts and the wheel hubs, thus limiting the number of wheels engaging as much as possible in this specific driving condition.

### Summary of the invention

The purpose of the present invention is to present a particularly compact single or dual-motor electric axle for industrial or commercial vehicles, capable of ensuring a high reduction ratio in one operating condition and high efficiency in another operating condition, when the reduction ratio is low.

The basic idea of the present invention is better expressed in the attached claim 1.

The first end of the drive shaft is proximal to the first end of the transmission shaft.

According to a preferred embodiment of the present invention, the electric machine is axially confined between a first plane, in which the first and second wheels lie, and a second plane, in which the third and fourth wheels lie.

Advantageously, three reduction stages are implemented between two axles only, the first associated with the halfshafts and the second with the driveshaft of the electric machine.

Advantageously, the wheels and any couplings are located at the ends of the electric machine, also allowing for easy maintenance and inspection.

It is evident that throughout this specification, the term "wheel" refers to a "toothed wheel" or gear.

The dependent claims describe preferred variants of the invention and form an integral part of this specification.

### Brief description of the figures

Further purposes and advantages of the present invention will be made clear from the following detailed description of an embodiment thereof (and its variants) and the accompanying drawings, which are provided purely for explanatory and non-limiting purposes, in which:

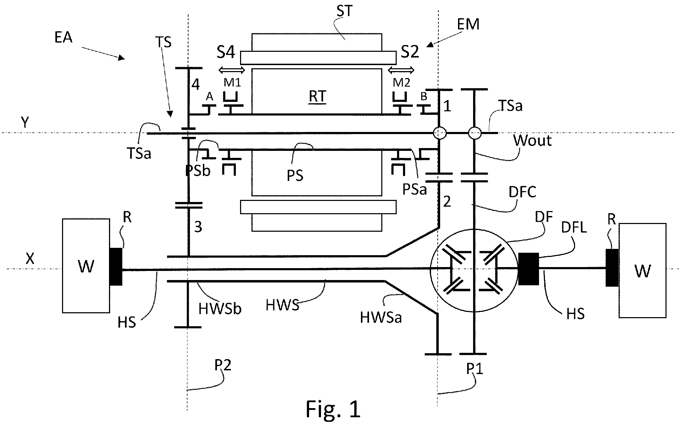

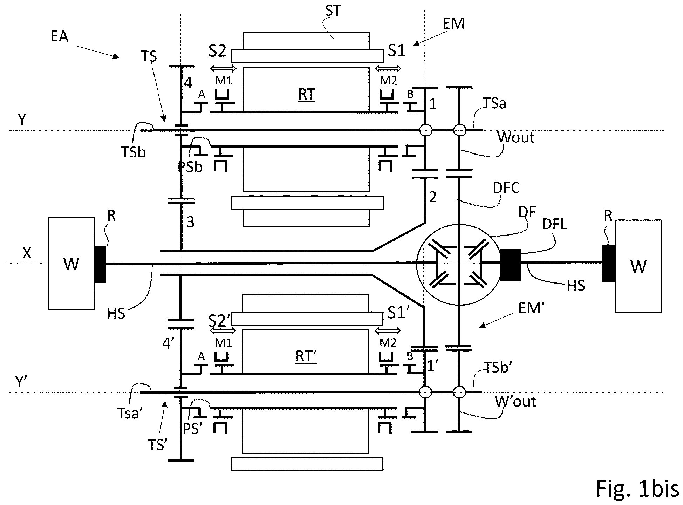

Figure 1 shows the axle according to the invention with a single electric machine, while

Figure 1 bis shows a variant with two electric machines connected in a mirror-like fashion to the differential.

Since the components of the second electric machine are mirror-like to the components of the first electric machine with respect to the X-axis, they are indicated with identical reference symbols with a superscript "'".

The same reference numbers and letters in the figures identify the same elements or components or functions.

It should also be noted that the terms "first", "second", "third", "upper", "lower", and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined with each other without departing from the scope of protection of this application as described below.

### Detailed description of preferred embodiments

The figures show examples of the present invention of an off-axis drive axle EA.

The hollow drive shaft PS of the electric motor is parallel but not coaxial with the axle, whose axis of development X is indicated by the half-shafts HS and the vehicle wheels W.

The half-shafts converge in the differential DF, to which a crown gear DFC is attached.

Preferably, the differential is arranged laterally, meaning that the half-shafts have different lengths, so as to more easily accommodate the electric machine, which is offset with respect to the differential.

The electric machine comprises, as is known, a stator ST supported by a suitable container (not shown) and a rotor RT, in which the rotor is attached to a hollow drive shaft PS.

A drive shaft TS is inserted into the drive shaft so that both opposite ends of the drive shaft emerge from the drive shaft of the electric machine.

The drive shaft supports, at a first end TSa, an output gear Wout that meshes with the crown gear DFC of the differential DF.

A fourth gear 4 can be connected to the second end PSb of the drive shaft PS and is rotatably supported by the second end TSb of the drive shaft TS.

This fourth gear receives motion from the electric motor, which passes through a hollow shaft HWS fitted onto one of the two axle shafts of the differential.

The hollow shaft HWS has a first end HWSa, proximal to the differential, and a second end HWSb, opposite the first end and distal to the differential. A second gear 2 is fixed to the first end HWSa, which meshes with the first gear 1, while the second end HWSb is fixed to a third gear 3, which meshes with the fourth gear 4.

The first gear 1 is also fixed to the first end Tsa of the drive shaft TS.

A first clutch S1 connects the first end PSa of the drive shaft PS to the first gear 1 or, equivalently, to the drive shaft TS.

A second clutch S2 connects or disconnects the fourth gear 4 with respect to the second end PSb of the drive shaft PS. The operation of the first clutch S1 alternates with the operation of the second clutch S2, meaning that when one is closed, the other must be open and vice versa, as described above.

The drive shaft PS and the drive shaft TS identify a Y axis parallel to the X axis.

It is worth noting that there are at least three gear meshings between the X and Y axes, allowing the overall dimensions to be contained within a plane identified between the X and Y axes of the drive axle, despite the possible presence of clutches and complications that allow for two or more gears. As we will see below, the S1 and/or S2 clutch can be of the quick-release type, with front teeth or radial teeth, known as a "dog clutch," and allows a wheel to be selected by making it rotate integral with the respective shaft. This clutch can also be of the friction cone type, or any type of clutch device that includes discs coated with friction material.

When the clutch device includes friction-coated disc clutches, the gear change can occur in a power-shift manner, i.e. without interrupting the torque passing through the clutch device itself.

According to one aspect of the present invention, the electric machine is axially confined between a first plane P1, in which the first wheel 1 and the second wheel 2 lie, and a second plane P2, in which the third and fourth wheel lie. The first and second planes are parallel to each other and perpendicular to the direction X of development of the axle EA of the present invention.

Advantageously, the wheels and any couplings are located at the ends of the electric machine, also allowing for easy maintenance and inspection.

In the dual-motor variant, the transmission ratios achieved by the second machine with the wheels connected to it can be the same as the transmission ratios achieved by the wheels connected to the first electric machine, benefiting production savings by effectively duplicating the components used. The same economic advantage can be achieved by using the same type of electric machine between the two branches.

If necessary, both the two electric machines and the transmission wheels can be differentiated to obtain different gears. The diversification of the electric machines can be achieved in terms of their performance (torque, power, and rotation speed) as well as in terms of size. Finally, the center distance (the distance between the Y and Y' axes) can also be the same or different to better differentiate the diameters and therefore the transmission ratios achieved between the gears connected to the electric machines.

According to the present invention, when the clutch device S1 is engaged, the drive shaft PS is directly connected to the transmission shaft TS, bypassing the hollow shaft HWS. Conversely, when the second clutch device is engaged, the torque passes through the hollow shaft, resulting in a higher reduction ratio but maintaining a greater number of rotating masses.

Figure 1bis shows the variant of Figure 1 with two electric machines EM, EM', arranged mirror-image with respect to the X axis.

This variant can enable the hidden-shift function, since, while one electric machine is operational and connected to the differential, the other can be disconnected to perform a gear change. In other words, it is possible to provide a predetermined continuous value of drive torque to the wheels during gear changes involving the wheels belonging to the two electric machines.

According to the diagram in Figure 1bis, the electric axle is equipped with four engagement devices S1, S1', S2, and S2' and can operate while the two electric machines are connected to the common differential using preferably different gear ratios.

This option is advantageous in preventing the simultaneous disconnection of both electric machines during gear changes.

For both the single- and dual-electric machine versions, the sailing function can also be implemented, which disconnects one or both electric machines, thus reducing mechanical losses due to the drag of the transmission components when no torque is required at the wheels while the vehicle is in motion.

Finally, the vehicle towing function can be implemented using the engagement and disconnection systems, in which one or both electric motors are disconnected from the differential, thus allowing easier towing without the rotation of the electric motors and with a more limited number of rotating components related to the transmission, which is effectively in neutral with respect to the vehicle wheels W.

Any of the schemes shown here can be equipped with a DFL differential lock device and/or an additional portal or epicyclic wheel speed reducer R for each of the HS half-shafts.

## Claims

1. Electric axle (EA) for industrial or commercial vehicles comprising
- a differential (DF) equipped with a crown gear (DFC) and two half-shafts (HS) to rotate an equal number of vehicle wheels (W),
- a first electric machine (EM) having a first hollow drive shaft (PS), having a first end (PSa) connectable to a first wheel (1) by means of a first coupling device (S1), and in which, in the drive shaft, is inserted coaxially
- a transmission shaft (TS) having a first end (Tsa) to which said first wheel (1) is fixed and an output wheel (Wout) that meshes with the crown gear (DFC) of the differential,
- a hollow shaft (HWS) fitted onto one of the two half-shafts
(HS) of the differential having a first end (HWSa), proximal to the differential and a second end (HWSb) distal to the differential, wherein on the first end (HWSa) a second wheel (2) is fixed which meshes with said first wheel (1) and on the second end (EWSb) a third wheel (3) is fixed which meshes with a fourth wheel (4) connectable with a second end (PSb), opposite the first end (PSa) of the drive shaft (PS) by means of a second engagement device (S2).

2. Axle according to claim 1, wherein the electric machine is axially confined between a first plane (P1), identified by the first and second wheels (1, 2), and a second plane (P2), identified by the third and fourth wheels (3, 4).

3. Axle according to any of the preceding claims, wherein the first wheel (1) is adjacent to the output wheel (Wout) and the second wheel (2) is adjacent to the crown gear (DFC) of the differential.

4. Axle according to any of claims 1 - 3, wherein said first selection device (S1) and said second selection device (S2) are configured to be active exclusively alternately.

5. Axle according to any of the preceding claims 1 - 4, wherein said first and second selection devices (S1, S2) are adapted to define a neutral configuration.

6. Axle according to claim 5, wherein said first and/or second engagement devices comprise a dog clutch quick-release coupling or a synchronized clutch with friction cones.

7. Axle according to claim 7, wherein said engagements (S1, S2) are equipped with discs coated with friction material and configured to perform a power-shift function.

8. Axle according to any of the preceding claims, wherein said differential is arranged laterally with respect to the electric machine so that a first half-shaft is longer than a respective second half-shaft and wherein said electric machine is therefore adjacent to said first half-shaft.

9. Axle according to any of the preceding claims, wherein said drive shaft (PS) and said transmission shaft (TS) define a first axis of development (Y) and said half-shafts (HS) and said hollow shaft (HWS) define a second axis of development (X) and wherein a larger dimension of the axle is contained in a plane defined by said first and second axes of development.

10. Axle according to any preceding claim, further comprising a second electric machine (EM') having a second hollow drive shaft (PS'), having a first end (PSa') connectable to a further first wheel (1') by means of a third engagement device (S1'), and wherein, in the second drive shaft (PS') is inserted coaxially
- a second drive shaft (TS') having a first end (Tsa') to which said further first wheel (1') is fixed and a further output wheel (W'out) that meshes with the ring gear (DFC) of the differential,
and wherein said second wheel (2) meshes with said further first wheel (1') and said third wheel (3) meshes with a further fourth wheel (4') connectable to a second end (PSb'), opposite the first end (PSa'), of the second drive shaft (PS'), by means of a fourth engagement device (S2').

11. An axle according to any preceding claim, wherein said differential is equipped with a locking device (DFL) capable of mutually locking said two half-shafts (HS) from rotation relative to the differential housing (DF).

12. An axle according to any preceding claim, wherein each of said two half-shafts is equipped with an additional portal or epicyclic wheel reduction gear (R).

13. An industrial or commercial vehicle comprising an electric axle according to any of claims 1 - 12.
